# EUROPÄISCHE PATENTSCHRIFT

(11) **EP 2 252 794 B1**
(45) Veröffentlichungstag und Bekanntmachung des Hinweises auf die Patenterteilung: **31.08.2011**
(21) Anmeldenummer: 09710956.5
(22) Anmeldetag: 11.02.2009
(51) Int. Cl.: F04B 41/04, F04B 25/00, F04B 41/02, F02D 9/06

(54) **VERFAHREN UND VORRICHTUNG ZUM VERSORGEN EINES KOMPRESSORS MIT DRUCKLUFT BEI EINER VERBRENNUNGSKRAFTMASCHINE**
METHOD AND DEVICE FOR SUPPLYING A COMPRESSOR IN AN INTERNAL COMBUSTION ENGINE WITH COMPRESSED AIR
PROCÉDÉ ET DISPOSITIF POUR ALIMENTER UN COMPRESSEUR EN AIR COMPRIMÉ DANS UN MOTEUR À COMBUSTION INTERNE

(30) Priorität: 12.02.2008 DE 102008008721
(43) Veröffentlichungstag der Anmeldung: 24.11.2010
(73) Patentinhaber: KNORR-BREMSE Systeme für Nutzfahrzeuge GmbH, 80809 München (DE)
(72) Erfinder: MAYR, Mathias, 82110 Germering (DE)
(74) Vertreter: Schönmann, Kurt
(86) Internationale Anmeldenummer: PCT/EP2009/000939
(87) Internationale Veröffentlichungsnummer: WO 2009/100884

(56) Entgegenhaltungen:
- DE-A1-102004 047 975
- DE-C1- 19 849 914
- US-A- 5 992 390
- US-A- 5 997 259

## Beschreibung

Die Erfindung betrifft ein Verfahren und eine Vorrichtung zum Versorgen eines Kompressors mit Druckluft bei einer Verbrennungskraftmaschine.

Derartige Verbrennungskraftmaschinen, zum Beispiel Kolbenmaschinen wie Dieselmotoren, weisen einen Kompressor zur Erzeugung von Druckluft auf, die für unterschiedliche Zwecke, beispielsweise für eine Druckluftbremsanlage oder einen Zusatzluftspeicher für unterschiedliche Einsatzzwecke, benötigt wird.

Der Anmelderin ist ein Kompressor bekannt, siehe DE 10 2004047975A1, welcher mit Luft aus dem Ansaugkrümmer der Verbrennungskraftmaschine gespeist wird. Je nach Betriebszustand und Drehzahl des zum Beispiel mit einem Turbolader aufgeladenen Motors ist der Druck an der Entnahmestelle aus dem Ansaugkrümmer höher als die Umgebungsluft. Damit wechselt der Kompressor seinen Betrieb von reinem Saugbetrieb in einen aufgeladenen Betrieb, was seinen Wirkungsgrad und damit die geförderte Luftmenge deutlich erhöht. Nachteilig bei dieser Anordnung ist die Tatsache, dass der Kompressor mit Druck beaufschlagte Luft aus dem Ansaugkrümmer entnimmt und sie damit der Verbrennungskraftmaschine vorenthält. Das heißt, dass die Leistung der Verbrennungskraftmaschine in diesem Betriebszustand wiederum durch die abgeführte Luft reduziert ist, was unerwünscht ist.

Dokument US 5 997 259 A offenbart ein Verfahren und eine Vorrichtung zum Versorgen eines Druckluftbehälters mit Druckluft mittels eines Zylinders der Verbrennungskraftmaschine.

Es ist daher die Aufgabe der vorliegenden Erfindung, ein Verfahren und eine Vorrichtung zum Versorgen eines Kompressors mit Druckluft und Ansaugluft bei einer Verbrennungskraftmaschine bereitzustellen, wobei die obigen Nachteile behoben beziehungsweise bedeutend verringert sind und weitere Vorteile geschaffen sind.

Die Aufgabe wird mit einem Verfahren mit den Merkmalen des Anspruchs 1 und durch eine Vorrichtung mit den Merkmalen des Anspruchs 5 gelöst.

Ein Grundgedanke der Erfindung besteht darin, dass eine Entnahmestelle von Luft für den Kompressor an eine Stelle der Verbrennungskraftmaschine an ihrem Abgaskrümmer angeordnet ist.

Dadurch wird vorteilhaft erreicht, dass die Ansaugluftmenge für die Verbrennungskraftmaschine nicht dezimiert wird und so die ihre Leistung nicht eingeschränkt wird.

Im Schubbetrieb moderner Verbrennungskraftmaschinen mit elektronisch geregelter Kraftstoffzuführung wird kein Kraftstoff mehr zugeführt, um dadurch den Energieverbrauch der Verbrennungskraftmaschine in diesem Betriebszustand zu reduzieren. Sie wird in dem Schubbetrieb nur zur Erzeugung von Druckluft verwendet, das heißt, die angesaugte Luft wird in den Zylindern komprimiert und in den Abgaskrümmer und die Abgasleitung ausgeblasen. Diese komprimierte Abluft wird durch eine Drosseleinrichtung gestaut und verdichtet, so dass sie ein deutlich höheres Druckniveau als die Umgebungsluft aufweist. Diese Drosseleinrichtung kann zum Beispiel eine übliche Motorbremsklappe einer schon vorhandene Motorbremsanlage sein, welche den Querschnitt der Abgasleitung verkleinert bzw. sogar sperrt. Die so hoch verdichtete Luft wird dann über ein gesteuertes Entnahmeventil dem Abgaskrümmer oder der Abgasleitung entnommen und dem Kompressor zugeführt, welcher dadurch als aufgeladener Kompressor mit einem erhöhten Wirkungsgrad betrieben wird.

Die Verbrennungskraftmaschine weist ein Motorsteuergerät zur Kraftstoffzuführung auf, welches Betriebsparameter von im Fahrzeug häufig schon vorhandenen Sensoren erhält. Diese Daten sind in vielen Fällen auch auf einem Fahrzeugbussystem, zum Beispiel CAN-Bus, verfügbar. Eine Steuereinheit übernimmt diese Daten zur Bestimmung der Betriebszustände und kann damit das Entnahmeventil und die Drosseleinrichtung zum richtigen Zeitpunkt so steuern, dass die von den Zylindern im Schubbetrieb erzeugte und von der Drosseleinrichtung gestaute Druckluft dem Kompressor zugeführt wird. Das Ventil kann auch nur bei einem Zylinder angeschlossen sein und/oder bei allen, um eine große Variationsmöglichkeit von Drucklufterzeugungsmengen zu erhalten.

Die so gewonnene Druckluft ist bei vergleichbarem Druckniveau wärmer als die Druckluft, die aus dem Ansaugkrümmer entnommen wird, da sie durch den im Verbrennungsbetrieb erwärmten Motor ebenfalls aufgewärmt wird. Somit ist der Wirkungsgrad des durch sie aufgeladenen Kompressors nicht so hoch wie bei der Luft aus dem Ansaugkrümmer, die aber auch häufig vorgewärmt ist. Bei Schubbetrieb der Verbrennungskraftmaschine handelt es sich jedoch um eine Überschussenergie, wobei der abgesenkte Wirkungsgrad des Kompressors vernachlässigbar ist.

Die von der Abgasleitung entnommene Druckluft wird, wenn sie eine bestimmte Temperatur überschreitet, durch einen Wärmetauscher gekühlt.

Weiterhin ist der Einlass des Kompressors mit der Atmosphäre über ein von der Steuereinheit steuerbares Einlassventil verbunden, um auch im Verbrennungsbetrieb der Verbrennungskraftmaschine Luft in einem Normalbetrieb komprimieren zu können.

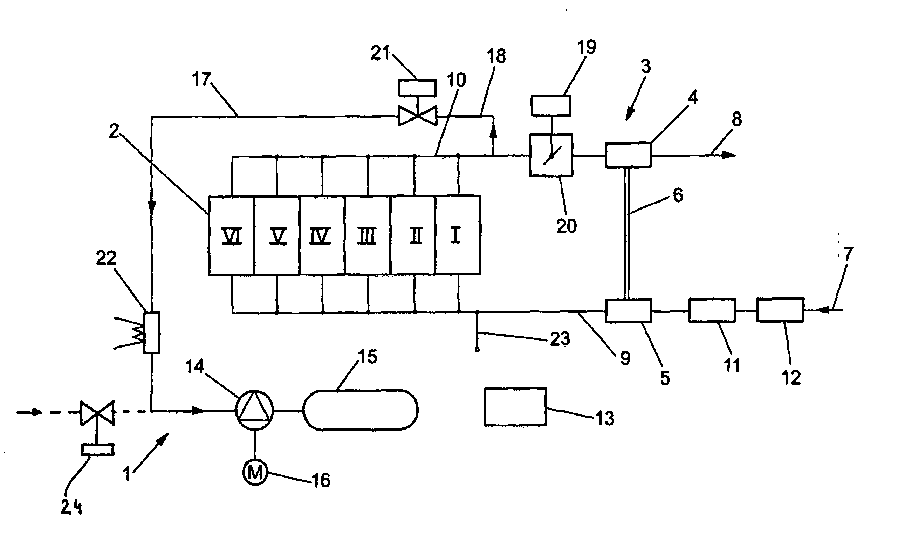

Die Erfindung wird nun anhand von Ausführungsbeispielen mit Bezug auf die beigefügte Zeichnung näher erläutert, welche eine schematische Darstellung einer Verbrennungskraftmaschine 2 mit einem Abgasturbolader 3 und einer erfindungsgemäßen Vorrichtung 1 zur Versorgung eines Kompressors 14 mit Druckluft zeigt.

Die Verbrennungskraftmaschine 2 ist in dem dargestellten Beispiel ein Dieselmotor mit sechs Zylindern I bis VI, einer Ansaugleitung 9 und einer Abgasleitung 10. Ein Lufteinlass 7 ist über einen Luftfilter 12 mit einer Ansaugluftvorwärmung 11 verbunden, die an einem Verdichter 5 des Abgasturboladers 3 angeschlossen ist. Daran schließt sich die Ansaugleitung 9 zu den Zylindern I bis VI an. Der Verdichter 5 des Abgasturboladers 3 ist mit einer Abgasturbine 4 des Abgasturboladers 3 über eine Kopplung 6, zum Beispiel eine Welle, gekoppelt. Die Abgasturbine 4 ist in der Abgasleitung 10 vor einem Abgasauslass 8 für Abgas der Verbrennungskraftmaschine 2 angeordnet und wird von einer Abgasströmung angetrieben.

In der Abgasleitung 10 ist vor der Abgasturbine 4 eine Drosseleinrichtung 20 angeordnet, welche mit einer Stelleinrichtung 19 gekoppelt ist. Diese Drosseleinrichtung 20 gehört in diesem Beispiel zu einer nicht dargestellten Motorbremsanlage. Die Drosseleinrichtung 20 kann aber zusätzlich angeordnet sein. Vor der Drosseleinrichtung 20 ist eine Entnahmedruckleitung 18 an der Abgasleitung 10 angeschlossen, welche diese mit einem steuerbaren Entnahmeventil 21 verbindet. Das Entnahmeventil 21 ist über eine Druckleitung 17 durch einen Wärmetauscher 22 mit einem Einlass eines Kompressors 14 verbunden.

Der Kompressor 14 wird in diesem Beispiel von einem Elektromotor als Kompressorantrieb 16 angetrieben. Der Kompressorantrieb 16 kann aber auch eine Kopplung mit der Kurbelwelle der Verbrennungskraftmaschine 2 sein. Ein Auslass des Kompressors 14 ist an einen Druckluftbehälter 15 zur Speicherung der von dem Kompressor 14 verdichteten Luft angeschlossen.

An dem Einlass des Kompressors 14 ist hier ein Einlassventil 24 gezeigt, welches den Einlass des Kompressors 14 mit der Atmosphäre steuerbar verbindet.

Eine Steuereinheit 13 dient zur Steuerung des Entnahmeventils 21, des Einlassventils 24 und der Stelleinrichtung 19 der Drosseleinrichtung 20. Die Steuereinheit 13 ist in diesem Beispiel mit einem nicht gezeigten Motorsteuergerät verbunden, welche die Einspritzanlagen der Zylinder I bis VI steuert und die Betriebszustände der Verbrennungskraftmaschine 2 über nicht dargestellte Sensoren ermittelt. Das Motorsteuergerät steuert die Verbrennungskraftmaschine in bekannter Weise und wird nicht weiter erläutert.

Die Funktion dieser Vorrichtung 1 wird nun beschrieben.

Aus Datenwerten des Motorsteuergeräts oder von einer Buseinrichtung beispielsweise ermittelt die Steuereinheit 13 im Vergleich die Betriebszustände der Verbrennungskraftmaschine 2. Liegt ein Schubbetrieb vor, wird kein Kraftstoff in die Zylinder I bis VI gefördert, welche nun nur Luft aus der Ansaugleitung 9 ansaugen und komprimieren. Im Ausstoßtakt wird das Entnahmeventil 21 von der Steuereinheit 13 aufgesteuert, und die erzeugte Druckluft der Verbrennungskraftmaschine 2 wird über die Druckleitung 17 an den Kompressor 14 geleitet. Gleichzeitig wird die Stelleinrichtung 19 der Drosseleinrichtung 20 so gesteuert, dass die Drosseleinrichtung 20 den Querschnitt der Abgasleitung 10 verkleinert bzw. verschließt, wodurch sich die von den Zylindern I bis VI erzeugte Druckluft staut und höher verdichtet wird. Weiterhin wird das Einlassventil 24 geschlossen. In den anderen Takten der Verbrennungskraftmaschine 2 bleibt das Ventil 21 geschlossen. Der Druckluftbehälter 15 kann in nicht dargestellter, üblicher Weise mit einem Rückschlagventil versehen, welches verhindert, dass die in ihm gespeicherte Druckluft entweichen kann. Ebenso kann an dem Einlassventil 24 ein Rückschlagventil vorgesehen sein, welches verhindert, dass über ein geöffnetes Einlassventil 24 durch die Druckleitung 17 geförderte Druckluft in die Atmosphäre entweichen kann. Der Wärmetauscher 22 kann zu heiße Druckluft aus der Abgasleitung 10 optional auf einen erwünschten Wert kühlen.

An der Ansaugleitung 9 ist hier ein Anschluss 23 gezeigt, an welchem der Einlass- des Kompressors 14 im Stand der Technik üblicherweise angeschlossen ist und der Verbrennungsmaschine erforderliche Ansaugluft, wie oben beschrieben ist, entnimmt und dadurch vorenthält.

Die Erfindung ist nicht auf die oben beschriebenen Ausführungsbeispiele beschränkt. Sie ist im Rahmen der beigefügten Ansprüche modifizierbar.

Zum Beispiel kann der Kompressor 14 auch stellvertretend für eine in einem Nutzfahrzeug vorhandene Drucklufterzeugungsanlage oder eine zusätzliche Anlage sein.

Die Ventile 21 und 24 können auch pneumatisch oder elektro-pneumatisch steuerbar sein.

Die Vorrichtung 1 ist auch für Verbrennungskraftmaschinen 2 ohne Turbolader 3 geeignet.

Die Steuereinheit 13 kann Bestandteil eines Motorsteuergerätes sein.

### Bezugszeichenliste

- 1: Vorrichtung
- 2: Verbrennungskraftmaschine
- 3: Abgasturbolader
- 4: Abgasturbine
- 5: Verdichter
- 6: Kopplung
- 7: Lufteinlass
- 8: Abgasauslass
- 9: Ansaugleitung
- 10: Abgasleitung
- 11: Ansaugluftvorwärmung
- 12: Luftfilter
- 13: Steuereinheit
- 14: Kompressor
- 15: Druckluftbehälter
- 16: Kompressorantrieb
- 17: Druckleitung
- 18: Entnahmedruckleitung
- 19: Stelleinrichtung
- 20: Drosseleinrichtung
- 21: Entnahmeventil
- 22: Wärmetauscher
- 23: Anschluss
- 24: Einlassventil
- I ... VI: Zylinder

## Patentansprüche

1. Verfahren zum Versorgen eines Kompressors (14) mit Druckluft bei einer Verbrennungskraftmaschine (2), welches folgende Verfahrensschritte aufweist:
(i) Ermitteln von Betriebsparametern der Verbrennungskraftmaschine (2) zum Bestimmen von Betriebszuständen der Verbrennungskraftmaschine (2);
(ii) Erzeugen von Druckluft durch die Verbrennungskraftmaschine (2) anhand der ermittelten Betriebsparameter in einem verbrennungslosen Betriebszustand und Stauen der erzeugten Druckluft mittels einer Drosseleinrichtung; und
(iii) Entnehmen der erzeugten gestauten Druckluft zum Versorgen des Kompressors (14),
wobei die entnommene Druckluft gekühlt wird, wenn sie eine bestimmte Temperatur überschreitet, und
wobei der Kompressor in einem Normalbetrieb mit der Atmosphäre über ein Einlassventil verbunden wird, wenn die Verbrennungskraftmaschine (2) im Verbrennungsbetrieb keine Druckluft erzeugt.

2. Verfahren nach Anspruch 1, **dadurch gekennzeichnet, dass** das Erzeugen von Druckluft mittels zumindest eines Zylinders (I...VI) der Verbrennungskraftmaschine (2) erfolgt, welchem im verbrennungslosen Betriebszustand kein Kraftstoff zugeführt wird.

3. Verfahren nach Anspruch 2, **dadurch gekennzeichnet, dass** beim Stauen von Druckluft im verbrennungslosen Betriebszustand der Verbrennungskraftmaschine (2) ein Querschnitt einer Abgasleitung (10) mittels einer Drosselvorrichtung (20) reduziert wird.

4. Verfahren nach einem der vorhergehenden Ansprüche, **dadurch gekennzeichnet, dass** die erzeugte Druckluft über zumindest ein gesteuertes Entnahmeventil (21) dem Kompressor (14) zugeführt wird.

5. Vorrichtung (1) zur Durchführung eines Verfahrens nach einem der vorhergehenden Ansprüche zur Versorgung eines Kompressors (14) mit Druckluft bei einer Verbrennungskraftmaschine (2), welche Folgendes aufweist: eine Verbrennungskraftmaschine (2); einen Kompressor (14); einen Wärmetauscher (22);
zumindest ein steuerbares Entnahmeventil (21), welches einen Auslass zumindest eines Zylinders (I...VI) der Verbrennungskraftmaschine (2) mit dem Kompressor (14) über den Wärmetauscher (22) verbindet, wenn die Verbrennungskraftmaschine (2) in einem verbrennungslosen Betriebszustand ist;
eine steuerbare Drosseleinrichtung (20) zur Veränderung eines Querschnitts einer Abgasleitung (10) der Verbrennungskraftmaschine (2) zur Stauung von durch den zumindest einen Zylinder (I...VI) erzeugter Druckluft; und
eine Steuereinheit (13) zur Erfassung von Betriebsparametern der Verbrennungskraftmaschine (2) zur Bestimmung von Betriebszuständen der Verbrennungskraftmaschine (2) und zur Steuerung des Ventils (21) und der Drosseleinrichtung (20), wobei ein Einlass des Kompressors (14) über ein Einlassventil (24) mit der Atmosphäre verbindbar ist.

6. Vorrichtung nach Anspruch 5, **dadurch gekennzeichnet, dass** das Entnahmeventil (21) über einen Wärmetauscher (22) mit einem Einlass des Kompressors (14) verbunden ist.

7. Vorrichtung nach Anspruch 6, **dadurch gekennzeichnet, dass** das Einlassventil (24) mit der Steuereinheit (13) zur Steuerung verbunden ist.

## Claims

1. Method for supplying a compressor (14) with compressed air in an internal combustion engine (2), which has the following method steps:
(i) determination of operating parameters of the internal combustion engine (2) in order to determine operating states of the internal combustion engine (2);
(ii) generation of compressed air by means of the internal combustion engine (2) on the basis of the determined operating parameters in a combustion-free operating state and build-up of the generated compressed air by means of a throttle device; and
(iii) removal of the generated built-up compressed air for supplying the compressor (14),
the removed compressed air being cooled when it exceeds a certain temperature, and
the compressor being connected, during normal operation, to the atmosphere via an inlet valve when the internal combustion engine (2), in combustion mode, is not generating any compressed air.

2. Method according to Claim 1, **characterized in that** the generation of compressed air takes place by means of at least one cylinder (I...VI) of the internal combustion engine (2), to which cylinder no fuel is supplied in the combustion-free operating state.

3. Method according to Claim 2, **characterized in that**, during the build-up of compressed air in the combustion-free operating state of the internal combustion engine (2), a cross section of an exhaust line (10) is reduced by means of a throttle device (20).

4. Method according to one of the preceding claims, **characterized in that** the generated compressed air is supplied to the compressor (14) via at least one controlled extraction valve (21).

5. Device (1) for carrying out a method according to one of the preceding claims for supplying a compressor (14) with compressed air in an internal combustion engine (2), which has the following: an internal combustion engine (2); a compressor (14); a heat exchanger (22); at least one controllable extraction valve (21) which connects an outlet of at least one cylinder (I...VI) of the internal combustion engine (2) to the compressor (14) via the heat exchanger (22) when the internal combustion engine (2) is in a combustion-free operating state;
a controllable throttle device (20) for varying a cross section of an exhaust line (10) of the internal combustion engine (2) in order to build up compressed air generated by the at least one cylinder (I...VI); and
a control unit (13) for detecting operating parameters of the internal combustion engine (2) in order to determine operating states of the internal combustion engine (2) and to control the valve (21) and the throttle device (20), wherein an inlet of the compressor (14) is connectable to the atmosphere via an inlet valve (24).

6. Device according to Claim 5, **characterized in that** the extraction valve (21) is connected to an inlet of the compressor (14) via a heat exchanger (22).

7. Device according to Claim 6, **characterized in that** the inlet valve (24) is connected to the control unit (13) for control.

## Revendications

1. Procédé d'alimentation d'un compresseur (14) en air comprimé dans un moteur (2) à combustion interne, qui a les stades de procédé suivants :
(i) on détermine des paramètres de fonctionnement du moteur (2) à combustion interne pour la détermination d'états de fonctionnement du moteur (2) à combustion interne ;
(ii) on produit de l'air comprimé par le moteur (2) à combustion interne au moyen des paramètres de fonctionnement déterminés dans un état de fonctionnement sans combustion et on accumule l'air comprimé produit au moyen d'un dispositif d'étranglement ; et
(iii) on prélève l'air comprimé produit et accumulé pour l'alimentation du compresseur (14),
dans lequel on refroidit l'air comprimé prélevé, si une certaine température est dépassée, et
dans lequel le compresseur communique, dans un fonctionnement normal, avec l'atmosphère par l'intermédiaire d'une vanne d'admission, si le moteur (2) à combustion interne ne produit par d'air comprimé en fonctionnement de combustion.

2. Procédé suivant la revendication 1, **caractérisé en ce qu'**on effectue la production d'air comprimé au moyen d'au moins un cylindre (I...VI) du moteur (2) à combustion interne, auquel on n'envoie pas de carburant dans l'état de fonctionnement sans combustion.

3. Procédé suivant la revendication 2, **caractérisé en ce que**, lors de l'accumulation d'air comprimé dans l'état de fonctionnement sans combustion du moteur (2) à combustion interne, on réduit une section transversale d'un conduit (10) de gaz d'échappement au moyen d'un dispositif (20) d'étranglement.

4. Procédé suivant l'une des revendications précédentes, **caractérisé en ce qu'**on envoie l'air comprimé produit au compresseur (14) par au moins une vanne (21) de prélèvement commandé.

5. Dispositif (1) pour la mise en oeuvre du procédé suivant l'une des revendications précédentes d'alimentation d'un compresseur (14) en air comprimé dans un moteur (2) à combustion interne, qui comporte ce qui suit :
un moteur (2) à combustion interne ; un compresseur (14) ;
un échangeur de chaleur (22) ; au moins une vanne (21) de prélèvement, qui peut être commandée et qui met une sortie d'au moins un cylindre (I...VI) du moteur (2) à combustion interne en communication avec le compresseur (14) par l'intermédiaire de l'échangeur de chaleur (22), si le moteur (2) à combustion interne est dans un état de fonctionnement sans combustion ;
un dispositif (20) d'étranglement, qui peut être commandé et qui est destiné à modifier une section transversale d'un conduit (10) de gaz d'échappement du moteur (2) à combustion interne pour l'accumulation d'air comprimé produit par le au moins un cylindre (I...VI) ; et
une unité (13) de commande pour la détection de paramètres de fonctionnement du moteur (2) à combustion interne en vue de la détermination d'états de fonctionnement du moteur (2) à combustion interne et de la commande de la vanne (21) et du dispositif (20) d'étranglement, une admission du compresseur (14) pouvant communiquer avec l'atmosphère par une vanne (24) d'admission.

6. Dispositif suivant la revendication 5, **caractérisé en ce que** la vanne (21) de prélèvement communique avec une admission du compresseur (24) par un échangeur de chaleur (22).

7. Dispositif suivant la revendication 6, **caractérisé en ce que** la vanne (24) d'admission est reliée pour la commande à l'unité (13) de commande.
